# EUROPEAN PATENT APPLICATION

(11) **EP 4 821 991 A1**
(43) Date of publication of application: **14.10.2026**
(21) Application number: 25169569.8
(22) Date of filing: 09.04.2025
(51) Int. Cl.: C09D 5/00

(54) **APPLICATION OF A HIGH-SOLIDS EPOXY COATING COMPOSITION BY ELECTROSTATIC SPRAYING**

(71) Applicant: PPG Coatings Europe B.V., 1047 BB Amsterdam (NL)
(72) Inventor: DE BOER, Jan, 1047 BB Amsterdam (NL); KIM, Je Hyuk, 1047 BB Amsterdam (NL); KEKSIN, Damla, 1047 BB Amsterdam (NL); GEELS, Gerard, 1047 BB Amsterdam (NL); VAN VLIET, Cornelis Hubertus, 1047 BB Amsterdam (NL)
(74) Representative: f & e patent

(57) **Abstract**

The disclosure provides a process for applying a high-solids epoxy coating composition onto a metal substrate by electrostatic spraying, wherein the coating composition is obtained by combining a first liquid and a second liquid, the first liquid comprising (A) an epoxy resin comprising (A1) a bisphenol A epoxy resin and (A2) a hydrogenated bisphenol A epoxy resin; (B) a reactive diluent; and (C) a silane compound; and the second liquid comprising (D) an amine-based curing agent. The coating composition has a solids content of 90 % by weight or more and a viscosity of from 1,400 to 2,200 mPa·s. The ratio of the active hydrogen equivalent in the curing agent to the epoxy equivalent in the first liquid ranges from 50:100 to 100:100; and the weight ratio of bisphenol A epoxy resin (A1) to hydrogenated bisphenol A epoxy resin (A2) ranges from 60:40 to 25:75.

## Description

### TECHNICAL FIELD

The present disclosure relates to the application of an epoxy coating composition containing no solvent or having low solvent content used as a paint onto metal substrates, such as onto parts of ship structures, particularly for the prevention of rust.

### BACKGROUND

Generally, ships are composed of parts such as an exposed deck, void space, cofferdam, engine room, cargo hold, cargo tank, water ballast tank, and the like. Each part is manufactured as an individual block so that it can be painted and then assembled.

In the process of building such a ship, a universal primer with excellent anti-rust property and excellent adhesion to various finishing paints is applied as a single primer to all pre-treated blocks to simplify the process and minimize waste. Many known universal primers are epoxy-based and most discharge considerable amounts of volatile organic compounds (VOC), which is undesirable in terms of worker health and the environment. With the trend of strengthening VOC emission regulations (regulations on the total amount of solvents), ultra-high solids primers with a further reduced solvent content have been developed for safety, economics, and environmental reasons.

US 2023/0242786 A1 describes a high-solids epoxy primer composition that has a low VOC value, appropriate viscosity, and sufficient pot life so that it can be applied with a conventional airless sprayer. The composition has excellent workability and film properties. The conventional airless sprayer must be operated at relatively high pressures to atomize the high-solids composition. However, traditional airless spraying methods can result in significant overspray with a considerable percentage of the coating not reaching the intended surface.

Therefore, there is an ongoing demand to develop efficient, cost-effective, and user-friendly processes for the application of high-solids epoxy compositions.

### SUMMARY

The present disclosure is directed to a process for applying a high-solids epoxy coating composition onto a metal substrate by electrostatic spraying, wherein the coating composition is obtained by combining a first liquid and a second liquid, the first liquid comprising (A) an epoxy resin comprising (A1) a bisphenol A epoxy resin and (A2) a hydrogenated bisphenol A epoxy resin; (B) a reactive diluent; and (C) a silane compound; and the second liquid comprising (D) an amine-based curing agent; the coating composition has a solids content of 90 % by weight or more when determined according to ASTM D5201-05; has a viscosity of from 1,400 to 2,200 mPa·s when measured according to ASTM 2196-15 with a RVDV2T Brookfield Digital Viscometer, spindle 6, at 100 rpm at a temperature of 23°C; the ratio of the active hydrogen equivalent in the curing agent to the epoxy equivalent in the first liquid ranges from 50:100 to 100:100; and the weight ratio of bisphenol A epoxy resin (A1) to hydrogenated bisphenol A epoxy resin (A2) ranges from 60:40 to 25:75.

The present disclosure also relates to the use of a high-solids epoxy coating composition for application onto a metal substrate by electrostatic spraying, wherein the coating composition is obtained by combining a first liquid and a second liquid, the first liquid comprises (A) an epoxy resin comprising (A1) a bisphenol A epoxy resin and (A2) a hydrogenated bisphenol A epoxy resin; (B) a reactive diluent; and (C) a silane compound; and the second liquid comprises (D) an amine-based curing agent; the coating composition has a solids content of 90 % by weight or more when measured according to ASTM D5201-05; has a viscosity of from 1,400 to 2,200 mPa·s when measured according to ASTM 2196-15 with a RVDV2T Brookfield Digital Viscometer, spindle 6, at 100 rpm at a temperature of 23°C; the ratio of the active hydrogen equivalent in the curing agent to the epoxy equivalent in the first liquid ranges from 50:100 to 100:100; and the weight ratio of bisphenol A epoxy resin (A1) to hydrogenated bisphenol A epoxy resin (A2) ranges from 60:40 to 25:75, for application onto a metal substrate by electrostatic spraying

In addition, the present disclosure is directed to a coated metal substrate obtainable by the above process.

### DETAILED DESCRIPTION

Surprisingly, it has been found that the above-described epoxy coating compositions can be applied by electrostatic spraying despite a high solids content. The advantage of improved transfer efficiency of the electrostatic spraying process can thus be exploited.

The epoxy coating composition applied by the process of the present disclosure can be obtained by combining a first liquid and a second liquid. The first liquid comprises (A) an epoxy resin comprising (A1) a bisphenol A epoxy resin and (A2) a hydrogenated bisphenol A epoxy resin; (B) a reactive diluent; and (C) a silane compound. The second liquid comprises (D) an amine-based curing agent. The epoxy coating composition that is applied electrostatically comprises (A) an epoxy resin comprising (A1) a bisphenol A epoxy resin and (A2) a hydrogenated bisphenol A epoxy resin; (B) a reactive diluent; (C) a silane compound; and (D) an amine-based curing agent.

The coating composition may comprise 5 to 35 % by weight of a bisphenol A epoxy resin (A1), 5 to 65 % by weight of a hydrogenated bisphenol A epoxy resin (A2), 2.5 to 20 % by weight of a reactive diluent (B) and 2.5 to 30 % by weight of a silane compound (C), based on the total weight of the composition.

Preferably, the high-solids epoxy coating composition of the present disclosure is a high-solids epoxy primer coating composition. This means that the coating composition is applied as a primer coating layer, typically to prevent rust.

### Main components of the coating composition used in the process

### (A) Epoxy resin

The coating composition used in the process of the present disclosure comprises an epoxy resin (A) as a binder resin components, typically originating from the first liquid. The epoxy resin (A) comprises a bisphenol A epoxy resin (A1) and a hydrogenated bisphenol A epoxy resin (A2).

### (A1) bisphenol A epoxy resin

A "bisphenol A epoxy resin" generally refers to a resin prepared by polymerizing bisphenol A and epichlorohydrin. The bisphenol A epoxy resin has at least two epoxy groups and serves to improve the low-temperature curability and adhesion of the coating composition to a substrate such as a blast steel sheet.

The bisphenol A epoxy resin is preferably liquid at room temperature. It is preferable that the bisphenol A epoxy resin is liquid at room temperature because it can lower the viscosity of the coating composition.

Two or more liquid bisphenol A epoxy resins may be mixed and used.

The bisphenol A epoxy resin may have an epoxy equivalent weight (EEW) in the range of from 100 to 300 g/eq., preferably from 150 to 250 g/eq., more preferably from 170 to 200 g/eq., as determined according to ASTM D1652-11.

The bisphenol A epoxy resin may have a weight average molecular weight of from 300 to 600 g/mole, preferably from 300 to 500 g/mol, and more preferably from 300 to 400 g/mol.

The bisphenol A epoxy resin may have a viscosity of from 7,000 to 30,000 mPa·s when measured according to ASTM D445-21 at a temperature of 25 °C, preferably from 8,000 to 20,000 mPa·s, and more preferably from 11,000 to 15,000 mPa·s.

The bisphenol A resin is typically bisphenol A diglycidyl ether. Representative liquid bisphenol A epoxy resins include Epikote 828 (Hexion, epoxy equivalent 182-187 g/eq.), Araldite GY 250 (Huntsman, epoxy equivalent 180-189 g/eq.), D.E.R. 331 (Dow, epoxy equivalent 182-192 g/eq.) and the like, but are not particularly limited thereto.

The coating composition may comprise the bisphenol A epoxy resin (A1) in an amount of from 5 to 35 % by weight, preferably from 6 to 30 % by weight, more preferably from 8 to 27 % by weight, and most preferably from 10 to 25 % by weight, based on the total weight of the coating composition.

Since the viscosity of the bisphenol A epoxy resin (A1) is typically 4 to 5 times higher than that of the hydrogenated bisphenol A epoxy resin (A2) described later, if the content of the bisphenol A epoxy resin (A1) exceeds 35 % by weight based on the total weight of the composition, the viscosity of the coating composition may increase and workability may deteriorate. On the other hand, when the content of the bisphenol A epoxy resin (A1) is less than 5 % by weight based on the total weight of the composition, the chemical resistance and water resistance of the coating composition may decrease and the drying time may increase.

### (A2) Hydrogenated bisphenol A epoxy resin

Hydrogenated bisphenol A epoxy resin refers to resins in which carbon-carbon unsaturated bonds of aromatic rings present in bisphenol A epoxy resins are hydrogenated. Hydrogenated bisphenol A epoxy resin has at least two epoxy groups and dries relatively slowly while having low viscosity and does not have an aromatic ring in the molecule, so it serves to improve the flexibility and pot life of the coating film.

The hydrogenated bisphenol A epoxy resin is preferably liquid at room temperature because it can lower the viscosity of the coating composition.

Also, two or more liquid hydrogenated bisphenol A epoxy resins may be mixed and used.

The hydrogenated bisphenol A epoxy resin may have an epoxy equivalent in the range of from 100 to 300 g/eq., preferably from 150 to 250 g/eq., and more preferably from 200 to 250 g/eq., as determined according to ASTM D1652-11.

The hydrogenated bisphenol A epoxy resin may have a viscosity of from 1,000 to 7,000 mPa·s when measured according to ASTM D445-21 at a temperature of 25 °C, preferably from 1,500 to 5,000 mPa·s, more preferably from 1,800 to 4,000 mPa·s.

The bisphenol A resin is typically hydrogenated bisphenol A diglycidyl ether. Representative liquid hydrogenated bisphenol A epoxy resins include EPONEX 1510 (Hexion, epoxy equivalent of 205 to 215 g/eq.), EP-4080E (ADEKA, epoxy equivalent of 215 g/eq.), ST-3000 (Kukdo, Epoxy equivalent 220 ~ 240 g / eq.) and the like, but are not particularly limited thereto.

The coating composition may comprise the hydrogenated bisphenol A epoxy resin (A2) in an amount of from 5 to 65 % by weight, preferably from 7 to 50 % by weight, more preferably from 8 to 30 % by weight, and most preferably 10 to 25 % by weight, based on the total weight of the coating composition.

If the content of the hydrogenated bisphenol A epoxy resin (A2) exceeds 65 % by weight based on the total weight of the composition, the chemical resistance and water resistance of the coating composition may deteriorate and the drying time may increase. On the other hand, when the content of the hydrogenated bisphenol A epoxy resin (A2) is less than 5 % by weight based on the total weight of the composition, the viscosity of the coating composition may increase and workability may deteriorate.

The weight ratio of the bisphenol A epoxy resin (A1) to the hydrogenated bisphenol A epoxy resin (A2) ranges from 60:40 to 25:75. When the weight ratio of the bisphenol A epoxy resin (A1) to the hydrogenated bisphenol A epoxy resin (A2) is within the above range, the coating composition can balance pot life and drying time while having suitable viscosity, chemical resistance, and water resistance. Preferably, the weight ratio of the bisphenol A epoxy resin (A1) to the hydrogenated bisphenol A epoxy resin (A2) ranges from 60:40 to 30:70, more preferably from 55:45 to 40:60.

### (A3) Other epoxy resins

The coating composition used in the process of the present disclosure may comprise other epoxy resins as the epoxy resin (A) in addition to the above-mentioned bisphenol A epoxy resin (A1) and the hydrogenated bisphenol A epoxy resin (A2). For example, the coating composition may comprise Bisphenol F epoxy resin, novolac epoxy resin, dimer modified epoxy resin, cycloaliphatic epoxy resin, epoxy resins and modified epoxy resins selected from glycidyl esters and epoxy functional acrylics or any combination thereof, but is not particularly limited thereto.

In this case, the content of the additional epoxy resin based on the total weight of the epoxy resin (A) may be 30 % by weight or less, preferably 20 % by weight or less, more preferably 10 % by weight or less, based on the total weight of the coating composition, in consideration of low-temperature curing properties, adhesion to the base or top coat, and economic feasibility.

### (B) Reactive diluent

The coating composition used in the process of the present disclosure comprises a reactive diluent (B) as one of the binder resin components, typically originating from the first liquid. The reactive diluent serves to lower the viscosity of the coating composition and improve atomization.

The reactive diluent may be formed from a modified epoxy compound. Examples of such reactive diluents include phenyl glycidyl ethers, alkyl glycidyl ethers (1 to 16 carbon atoms in the alkyl group), glycidyl esters of versatic acid (R¹R²R³C-COO-Gly, where R¹, R², and R³ are each an alkyl group having 8 to 10 carbon atoms, and Gly is a glycidyl group), olefin epoxide (CH₃-(CH₂)ₙ-Gly, where n is 11-13); 1,6-hexanediol diglycidyl ether (Gly-O-(CH₂)₆-O-Gly), neopentyl glycol diglycidyl ether (Gly-O-CH₂-C(CH₃) ₂-CH₂-O-Gly), trimethylolpropane triglycidyl ether (CH₃-CH₂-C(CH₂-O-Gly)₃) and C₁₋₂₀ alkylphenyl glycidyl ether, but are not particularly limited thereto.

Preferably, the reactive diluent is multifunctional, more preferable it is a multifunctional epoxy compound. Compared to a monofunctional reactive diluent, the multifunctional reactive diluent can accelerate the drying process and increase the crosslinking density by participating in the resin network formed during the curing reaction of the coating composition.

Typically, the reactive diluent comprises an aliphatic reactive diluent such as 1,6-hexanediol diglycidyl ether or 1,4-butanediol diglycidyl ether. These aliphatic reactive diluents can improve the flexibility of coating films.

The reactive diluents listed above may be used alone or in combination of two or more.

The reactive diluent may have a viscosity of from 10 to 50 mPa·s when measured according to ASTM 2196-15 with a RVDV2T Brookfield Digital Viscometer, spindle 2 at 100 rpm at a temperature of 25°C, preferably from 10 to 40 mPa·s, and more preferably from 10 to 35 mPa·s.

The coating composition may comprise the reactive diluent (B) in an amount of from 2.5 to 20 % by weight, preferably from 3 to 15 % by weight, more preferably 4 to 10 % by weight, and most preferably 5 to 8 % by weight, based on the total weight of the coating composition.

When the content of the reactive diluent in the coating composition is within the above range, the viscosity of the coating composition is lowered while the composition maintains a high solids content. When the content of the reactive diluent in the coating composition exceeds 20 % by weight based on the total weight of the composition, the drying time of the coating composition may be prolonged and heat resistance may be lowered.

### (C) Silane compound

The coating composition used in the process of the present disclosure comprises a silane compound (C) as one of the binder resin components, typically originating from the first liquid. The silane compound serves to lower the viscosity of the coating composition, improve drying properties, and improve rust prevention.

The silane compound may be an epoxy silane containing an epoxy group. Examples of such silane compounds include:
methacryloxypropyltrimethoxysilane (dynasilane MEMO, Silquest A-174NT),
3-mercaptopropyltri(meth)ethoxysilane (dynasilane MTMO or 3201, Silquest A-189),
3-glycidoxypropyltrimethoxysilane (dynasilane GLYMO, Silquest A-187),
tris (3-trimethoxysilylpropyl) isocyanurate (Silquest Y-11597),
γ-mercaptopropyltrimethoxysilane (Silquest A-189),
β-(3,4-epoxycyclohexyl)ethyltrimethoxysilane (Silquest A-186),
γ-isocyanatopropyltrimethoxysilane (Silquest A-Link 35, Genosil GF40),
(methacryloxymethyl)trimethoxysilane (Genosyl XL 33),
(isocyanatomethyl)trimethyx toxysilane (Genosil XL 43);
aminopropyltrimethoxysilane (dynasilane AMMO, Silquest A-1110),
aminopropyltriethoxysilane (dynasilane AMEO),
N-(2-aminoethyl)-3-aminopropyltrimethoxysilane (dynasilane DAMO, Silquest A-1120),
N-(2-aminoethyl)-3-aminopropyltriethoxysilane, triamino-functional trimethoxysilane (Silquest A-1130),
bis(γ-trimethoxysilylpropyl)amine (Silquest A-1170),
N-ethyl-γ-aminoisobutyltrimethoxysilane (Silquest A-Link 15),
N-phenyl-γ-aminopropyltrimethoxysilane (Silquest Y-9669),
4-amino-3,3-dimethylbutyltrimethoxysilane (Silquest Y-11637),
(N-cyclohexylaminomethyl)triethoxysilane (Genosyl XL 926),
(N-phenylaminomethyl)trimethoxysilane (Genosyl XL 973), Deolink Epoxy TE and Deolink Amino TE (D.O.G Deutsche Oelfabrik), 3-aminopropyltriethoxysilane, 3-aminopropyltrimethoxysilane, N-(aminoethyl)-aminopropyltrimethoxysilane, 3-aminopropylmethyldiethoxysilane, 3-(2-aminoethyl
amino)propylmethyldimethoxysilane
[3-(2,3-epoxypropoxy)propyl]triethoxysilane, and
[3-(2,3 -epoxypropoxy)propyl]trimethoxysilane, but is not particularly limited thereto. Typically, the silane compound may comprise 3-glycidoxypropyltrimethoxysilane.

The silane compounds listed above may be used alone or in combination of two or more.

The silane compound may have a weight average molecular weight of 400 g/mole or less, preferably 350 g/mol or less, and more preferably 300 g/mol or less.

The coating composition may comprise the silane compound (C) in an amount of from 2.5 to 30 % by weight, preferably from 3 to 27 % by weight, more preferably from 4 to 25 % by weight, and most preferably 5 to 20 % by weight, based on the total weight of the coating composition.

When the content of the silane compound in the coating composition is within the above range, the viscosity of the coating composition is lowered while the composition maintains a high solids content. When the content of the silane compound in the coating composition exceeds 30 % by weight based on the total weight of the composition, the pot life of the coating composition may be shortened.

### (D) Amine curing agent

The coating composition used in the process of the present disclosure comprises an amine-based curing agent (D), typically originating from the second liquid, for curing the binder components which typically originate from the first liquid.

The amine-based curing agent contains at least two reactive groups each containing at least one reactive hydrogen atom linked to nitrogen. Thus, amine-based curing agents may typically be primary or secondary amines. Examples of such amine-based curing agents include aliphatic amines and polyamines (for example, cycloaliphatic amines and polyamines), polyamido amines, polyoxyalkylene amines (for example, polyoxyalkylene diamines), aminated polyalkoxy ethers (such as those sold commercially as Jeffamine), alkylene amines (such as alkylene diamines), aralkyl amines, aromatic amines, Mannich bases (e.g., those sold commercially as "phenalkamines"); amines or amino-functional polymers selected from amino-functional silicones or silanes, epoxy adducts, and derivatives thereof, but are not particularly limited thereto. Examples of commercially available amine-based curing agents include Cardolite NC-541, Cardolite Light 2001 from Cardanol Chemicals; Sunmid CX-105X from Sanwa Chemical Industry Co., Ltd.; Epicure 3090, Epicure 3140, Epicure 3115X-70 from Resolution Performance Products; SIQ Amine 2015, SIQ Amine 2030 from SIQ Kunstarze GmbH; Polyfox VH 40309/12, Polyfox VH 40294 from Wolf Prümmer Polymer-Chemi GmbH; Ancarmin 2609, Ancarmin 2695, Ancarmin 2738 from Air Products; Adeka Hardner from Adeka Corporation, AP1077 from Admark, Setepox 1490 H from CTP Chemicals and Technologies for Polymers; Epoxy Hardener MXDA from Mitsubishi Gas Chemical Company, Inc.; Gascamine 240, diethylaminopropylamine, isophoronediamine from BASF; Cardolite Light 2002 from Cardanol Chemicals; Aradur 42 BD, Aradur 943 CH from Huntsman Advanced Materials; Cray Amide E260 E90 from Cray Valley, and the like, but are not particularly limited thereto.

The above-listed amine-based curing agents may be used alone or in combination of two or more.

Preferably, the amine-based curing agent comprises a phenalkamine or polyamine curing agent. More preferably, the amine-based curing agent comprises Ancamine 2738 from Air Products. Ancamine 2738 from Air Products can provide a sufficient curing rate of the coating composition above ambient temperature without the need for curing accelerators such as tertiary amines used in conventional coating compositions to improve pot life or water resistance.

The amine-based curing agent may have a viscosity of from 50 to 500 mPa·s, when measured according to ASTM 2196-15 with a RVDV2T Brookfield Digital Viscometer, spindle 6, at 100 rpm at a temperature of 23 °C, preferably from 70 to 400 mPa·s, and more preferably from 100 to 300 mPa·s.

The amine-based curing agent may have an active hydrogen equivalent weight (AHEW) in the range of from 30 to 150 g/eq., preferably from 50 to 100 g/eq., and more preferably from 75 to 100 g/eq.

The content of the curing agent in the coating composition is selected such that the ratio of active hydrogen equivalents in the curing agent to epoxy equivalents in the coating composition is in the range of from 50:100 to 100:100, preferably from 55:100 to 95:100, more preferably from 60:100 to 90:100, and most preferably from 70:100 to 90:100. When the content of the amine-based curing agent in the coating composition is selected such that the ratio of active hydrogen equivalent to epoxy equivalent of the coating composition satisfies the above range, a coating composition having optimal physical properties can be obtained.

The active hydrogen equivalent of the amine-based curing agent is the total of the molecular weight of each amine-based curing agent (D) in the coating composition divided by the number of active hydrogens capable of reacting with the epoxy group.

The epoxy equivalent of the coating composition is the total of the molecular weight of each of the epoxy group-containing binder components such as the epoxy resin (A), the reactive diluent (B) and the silane compound (C) divided by the number of epoxy groups.

### Optional components of the coating composition used in the process

### (E) Pigment

The coating composition used in the process of the present disclosure may comprise a pigment (E), typically originating from the first liquid. Specifically, the pigment (E) may comprise a color pigment (E1) and an extender pigment (E2). If necessary, the pigment (E) may further comprise a rust-preventive pigment (E3).

The color pigment (E1) has hiding power and coloring power. Examples of color pigments include titanium oxide, carbon black, lead white, graphite, zinc sulfide, zinc oxide, chromium oxide, yellow nickel titanium, yellow chrome titanium, yellow iron oxide, red iron oxide, black iron oxide, phthalocyanine blue, phthalocyanine green, ultramarine blue, benzimidazolone yellow, quinacridone red, azo red/yellow pigments, and the like, but are not particularly limited thereto. Preferred color pigments may comprise titanium oxide and/or carbon black.

The color pigments listed above may be used alone or in combination of two or more.

The coating composition may comprise the color pigment (E1) in an amount of from 0.1 to 25 % by weight, preferably from 1 to 20 % by weight, and more preferably from 5 to 12 % by weight, based on the total weight of the composition.

The extender pigment (E2) has no hiding power or coloring power, but can improve the mechanical properties of the coating film. Examples of extender pigments include talc, clay, calcium carbonate, magnesium carbonate, barium sulfate, silicic acid, silicates, alumina, calcium sulfate, mica iron oxide (MIO), glass flakes, mica, and the like, but are not particularly limited. Preferred extender pigments may comprise barium sulfate or mica.

The extender pigments listed above may be used alone or in combination of two or more.

In an embodiment of the present disclosure, the coating composition may comprise the extender pigment (E2) in an amount of from 25 to 60 % by weight, preferably from 30 to 55 % by weight, and more preferably 30 to 50 % by weight, based on the total weight of the composition.

The rust-preventive pigment (E3) improves the rust-preventive properties of the coating film. Examples of rust-preventive pigments include zinc molybdate, aluminum molybdate, lead cyanamide, lead, lead suboxide, zinc chromate, zinc powder, zinc oxide, basic lead chromate, basic lead sulfate, calcium plumbate, aluminum tripolyphosphate, zinc phosphate, calcium phosphate, aluminum powder, hemihydrate gypsum and the like, but are not particularly limited thereto.

The rust-preventive pigments listed above may be used alone or in combination of two or more.

### (F) Anti-settling agent

The coating composition used in the process of the present disclosure may comprise an anti-settling agent (F), typically originating from the first liquid. The antisettling agent (F) improves the rheological properties of the coating composition. Specifically, it gives the coating composition an improved rheology profile that prevents settling.

Anti-settling agents may include thixotropic agents such as polyamide waxes, polyethylene waxes, or bentonite-based thixotropic agents. Specific examples of such anti-settling agents include Craivalak Ultra and Cravalak LV from Arkema; Tixatrol ST and Tixatrol Max from Elementis; and Dispalon 6650 from Kusumoto Chemicals Limited, but are not particularly limited thereto. Preferred anti-settling agents may include polyamide waxes.

The above-listed anti-settling agents may be used alone or in combination of two or more.

The coating composition may include an anti-settling agent (E) in an amount of from 0.1 to 5 % by weight based on the total weight of the composition, preferably from 0.5 to 5 % by weight, more preferably 0.7 to 5 % by weight, based on the total weight of the composition.

### (G) Solvent

The coating composition may comprise a solvent, preferably in an amount of 4 % by weight or less, more preferably 3 % by weight or less, and even more preferably 2 % by weight or less, based on the total weight of the composition. The solvent may originate from the first liquid from which the coating composition is obtained.

Example solvents that may be used in the disclosed coating composition include toluene, xylene, isobutanol, methyl ethyl ketone, methyl isobutyl ketone, and benzyl alcohol, but are not particularly limited thereto. A preferred solvent may be benzyl alcohol. Since benzyl alcohol has a boiling point of 205°C, it remains on the coating film of the room temperature drying type of coating composition and it is believed that it is incorporated into the coating matrix. Thus, it is included in the calculation of the solids content. Benzyl alcohol can improve the speed of the crosslinking reaction between the epoxy resin and the amine-based curing agent while serving to lower the viscosity of the coating composition.

The solvents listed above may be used alone or in combination of two or more. Typically, the coating composition is free of any volatile solvents, i.e., it is preferably free of any other solvents than benzyl alcohol.

The coating composition used in the process of the present disclosure may further comprise other components than the components listed above. Examples of these additional ingredients include thermoplastic resins, color separation inhibitors, antifoaming agents, film formation aids, ultraviolet absorbers, antioxidants, leveling agents, gloss removers, hardening accelerators, dispersants, viscosity modifiers, surface conditioners, plasticizers, preservatives, reactive diluents, nonreactive diluents, and the like, but are not particularly limited thereto.

### Characteristics of the coating composition used in the process

The coating composition according to one embodiment of the present disclosure may be prepared through a method for preparing a general coating composition using an epoxy resin.

If the coating composition is prepared from two components including a first liquid and a second liquid, the first liquid containing an epoxy resin, a reactive diluent and a silane compound, and the second liquid containing an amine-based curing agent may be mixed with each other immediately before use.

The coating composition that is applied by electrostatic spraying typically comprises, directly after combining the first and second liquids: (A) an epoxy resin comprising 5 to 25 % by weight of a bisphenol A epoxy resin (A1) and from 5 to 50 % by weight of a hydrogenated bisphenol A epoxy resin (A2); from 2.5 to 10 % by weight of a reactive diluent (B); from 2.5 to 17 % by weight of a silane compound (C); an amine-based curing agent (D); a pigment (E) comprising from 0.1 to 25 % by weight of a color pigment (E1) and 25 to 60 % by weight of an extender pigment (E2); from 0.1 to 5 % by weight of an anti-settling agent (F); and from 0 to 4 % by weight of a solvent (G), based on the total weight of the composition; wherein the coating composition has (i) a solids content of at least 90 % by weight when determined according to ASTM D5201-05; (ii) a viscosity of from 1,400 to 2,200 mPa·s when measured according to ASTM 2196-15 with a RVDV2T Brookfield Digital Viscometer, spindle 6, at 100 rpm at a temperature of 23°C; (iii) a ratio of active hydrogen equivalents in the curing agent to epoxy equivalents in the coating composition ranges from 50:100 to 100:100; and (iv) a weight ratio of the bisphenol A epoxy resin (A1) to the hydrogenated bisphenol A epoxy resin (A2) ranges from 60:40 to 25:75.

Here, specific details regarding the (A) epoxy resin, (B) reactive diluent, (C) silane compound, and (D) amine-based curing agent; (E) pigment, (F) anti-settling agent, and (G) solvent are as described above.

The coating composition has a solids content of at least 90 % by weight when determined according to ASTM D5201-05. The solids content of the coating composition is preferably 93 % by weight, more preferably 95 % by weight or higher, even more preferably 97 % by weight or higher, still more preferably 99 % by weight or higher, and most preferably 100 % by weight.

As such, the coating composition exhibits a high solids content. Therefore, the coating composition may have a VOC content of 100 g/liter or less when determined according to ASTM D5201-05. The VOC content of the coating composition is preferably 80 g/liter or less, more preferably 70 g/liter or less, and most preferably 50 g/liter or less.

The coating composition has a viscosity of from 1,400 to 2,200 mPa·s when measured according to ASTM 2196-15 with a RVDV2T Brookfield Digital Viscometer, spindle 6, at 100 rpm at a temperature of 23°C. The viscosity of the coating composition is preferably 1,450 to 2,000 mPa·s, more preferably 1,500 to 1,900 mPa·s. As such, since the coating composition used in the process of the present disclosure exhibits low viscosity, it can exhibit excellent pot life and atomization degree when applied by electrostatic spraying.

The coating composition may have a pot life of 1 hour or more, preferably 1.2 to 2 hours, and more preferably 1.5 to 2 hours. Here, "pot life" refers to the time after mixing of the first and second liquids, which allows the coating composition to be applied to the substrate by the process of the present disclosure. It is defined as the time when the viscosity of the mixture rose by 50 % compared to the initial viscosity when measured every 10 minutes using a Krebs Units Viscometer according to ASTM D562. If the coating composition cures too quickly, the coating composition has a very short pot life. Pot life of less than 30 minutes is commercially challenging, given the time it takes to coat large objects such as ship blocks and the volume supplied to the spray gun.

The coating composition used in the process of the present disclosure can be cured on a substrate to provide a corrosion-resistant primer coating layer.

Application of the coating composition is made within pot life after mixing of the first and second liquids. Since the coating composition has a pot life of 1 hour or more, painting workability can be improved.

The applied coating composition may form a coating film through drying. The drying temperature is usually room temperature (20 to 35°C), but it is also possible to perform drying at a temperature lower than this. According to the present disclosure, the coating composition may have a drying time of 8 to 12 hours or more at 25°C when measured according to ASTM D5895 based on a coating film thickness of 300 µm. The drying time of the coating composition may be preferably 8.5 to 11.5 hours, more preferably 9 to 11 hours.

The coating film formed from the coating composition typically has a thickness of 100 to 500 µm, such as 150 to 350 µm. The thickness of the coating film may vary depending on the characteristics of the substrate to be coated and expected exposure conditions.

The coating film formed from the coating composition undergoes a curing process. The coating film may cure spontaneously. Although irradiation and heat may be used to promote cure, the compositions of the present disclosure may be cured at ambient temperature without such means.

Although the coating composition according to embodiments of the present disclosure is preferably applied as a single coating, in embodiments of the present disclosure, additional coatings may be formed while the coating film formed from the coating composition is in a wet state. Additional coatings can also be applied by electrostatic spraying.

The metallic substrate that is coated by the process of the present disclosure must be electrically conductive. Typically, the metallic substrate has an electric conductivity of at least 1 S/m, preferably at least 2 S/m, and most preferably at least 5 S/m. The high-solids epoxy composition can be applied onto a metal substrate such as steel, carbon steel, galvanized steel, shop primer steel, and aluminum.

The metal substrate may be part of a ship such as an exposed deck, void space, cofferdam, engine room, cargo hold, cargo tank, or water ballast tank.

The high-solids epoxy coating composition is applied by electrostatic spraying. During the electrostatic spraying process an electric field is generated between the underwater structure and a spraying device, for example by applying a voltage of from 50 to 125 kV. During the spraying process the coating composition is atomized. The process according to the present disclosure may comprise electrostatic air-assisted airless atomization. The atomized particles are charged, typically charged negatively, in the strong electric field and are attracted to the grounded underwater structure.

Electrostatic air-assisted airless atomization uses a high-pressure fluid supply for atomization and compressed air at the air cap for pattern control. Air-assisted airless spray technology uses the airless spray principle to atomize the fluid at reduced fluid pressure with assisted atomizing air to aid in reducing pattern tailing and affect pattern shape. Air-assisted airless spray technology offers some of the desirable characteristics of both airless spray and air spray. The high-solids epoxy coating composition of the present disclosure can be sprayed at low pressure meaning low delivery rates, and high transfer efficiency. By using air-assisted airless electrostatic atomization problems that can arise with heating and using higher fluid pressures to aid in the atomization of more viscous materials can be avoided.

The electrostatic spraying may be conducted by any suitable spraying device known in the art for electrostatic spraying. The spraying device for electrostatic air-assisted airless atomization typically comprises a medium to high-pressure pump, an air cap connected to the air supply and including at least one nozzle. The air cap including at least one nozzle is usually part of a spraying gun. The nozzle may comprise a spray port at the tip of the nozzle typically having an inside diameter of from 0.2 to 4 mm, preferably from 0.25 to 2 mm, and more preferably from 0.3 to 0.6 mm.

In the process of the present disclosure, the composition is applied using air assist pressure typically from 0.5 to 5 bar, preferably from 1.5 to 4.0 bar, and more preferably from 2.0 to 3.5 bar

In a process according to the present disclosure comprising electrostatic air-assisted airless atomization, the static material pressure at the pump typically ranges from 50 to 200 bar, preferably from 70 to 150 bar, and most preferably from 80 to 100 bar. The static material pressure at the gun may be lower due to pressure loss caused by the length of the means connecting the gun to the pump, such as a hose. Typically, the pump compression ratio (outlet pressure (= static material pressure at the pump) : inlet pressure) is from 45:1 to 70:1, preferably from 50:1 to 67:1, preferably from 55:1 to 65:1, and most preferably 60:1. The static material pressure is selected depending on the shape of the underwater structure to be coated. The static material pressure is the pressure before the spraying process is started. The dynamic pressure during spraying is always lower than the static material pressure due to pressure release through the nozzle.

For the application on hulls of large vessels the targeted application rate is typically at least 15 s/m².

The advantages of the electrostatic spraying process of the present disclosure are improved transfer efficiency leading to a reduction of paint consumption, hazardous waste, costs, and VOC emission. The electrostatic spraying process of the present disclosure further provides time savings due to the wrap-around effect. The coating composition, which is electrostatically charged by the spray gun, is attracted to all sides of the grounded structure. This wrap-around effect saves time, and depending on the structure, it may be coated from one side only. Due to the homogeneous alignment of the electrostatic field lines, the film thickness is extremely uniform. In addition, particles charged with the same polarity significantly improve the atomization power for creating an excellent surface finishing, i.e., a smooth surface and no air entrapment in the coat.

With the process of the present disclosure transfer efficiencies of 80 to 100 %, typically from 85 to 95 % or from 85 to 98 %, can be reached whereas the transfer efficiency of a non-electrostatic spraying process is often around 60 to 70 %.

### EXAMPLES

The following examples are intended to illustrate the present disclosure and should not be construed as limiting the disclosure in any way.

Viscosities were measured according to ASTM 2196-15 with a RVDV2T Brookfield Digital Viscometer, spindle 6, at 100 rpm at a temperature of 23°C unless otherwise indicated.

### Example 1:

Binder resins and compounds of the same types and contents (unit: parts by weight) as shown in Table 1 below were mixed. Specifically, the first liquid was prepared by dispersing the pigment using a high-speed dispersing machine, activating the anti-settling agent (viscosity modifier) by raising the temperature, and then mixing the remaining raw materials. Then, a coating composition was prepared by sufficiently stirring and mixing the first liquid and the second liquid with a stirrer until they became homogeneous. The ratio of active hydrogen equivalent in the curing agent to epoxy equivalent in the compositions was 72.3:100.

**Table 1:**

| | Percent by weight |
|---|---|
| **First liquid** | |
| | |
| Bisphenol A epoxy resin: EEW 190 g / eq., viscosity about 13,000 mPa·s (ASTM 445-21, 25 °C) | 12.48 |
| Hydrogenated bisphenol A epoxy resin: EEW 215 g / eq., viscosity about 2,1000 mPa·s (ASTM 445-21, 25 °C) | 13.18 |
| Antisettling agent: polyamide wax | 1.29 |
| Color pigment | 3.81 |
| Extender pigment | 41.05 |
| BENZYL ALCOHOL | 1.72 |
| Reactive diluent: 1,6-HEXANEDIOL DIGLYCIDYL ETHER | 5.37 |
| | |
| Silane compound: 3-GLYCIDYLOXYPROPYLTRIMETHOXY-SILANE | 7.10 |
| | |

| **Second liquid** | |
|---|---|
| Amine-based curing agent: AHEW 95 g/eq., 23 °C viscosity 220 mPa·s | 14.00 |
| | |
| Total: | 100.00 |

| | |
|---|---|
| Viscosity of the first liquid: | 5,200 mPa·s |
| Viscosity of the second liquid: | 220 mPa·s |
| Viscosity of the coating composition after mixing liquid 1 and 2: | 1,700 mPa·s |

The solids content of the composition according to according to ASTM D5201-05 is 100 % by weight

### Comparative Example 2

100 pbw of NOVAGUARD^{™} 650, a two-component, solvent-free amine cured epoxy coating, commercially available from PPG Industries, Inc., was diluted with 5 pbw of benzyl alcohol after mixing of the first and second component.

| | |
|---|---|
| Viscosity of the coating composition after dilution: | 1,940 mPas |

NOVAGUARD^{™} 650 has been diluted to approximately match the viscosity of the inventive example to ensure a fair comparison.

### Electrostatic spraying

The coating compositions of Example 1 and Comparative Example 2 were sprayed onto grounded objects at 25 °C and 22 % relative humidity in the spray booth using a WIWA Phoenix GX Model 200065, 65:1, high pressure double stroke piston pump and a Graco Pro Xp 85 kV electrostatic gun. The atomized particles were charged negatively by applying a maximum voltage of 80 kV.

### Example 1:

Inlet pressure: 1.5 bar (150 kPa)
Outlet pressure: 90 bar (9,000 kPa)
Air-assist pressure: 2.8 bar (280 kPa)
Nozzle: No. 516 with 0.016 inch (0.41 mm) bore

### Comparative Example 2:

Inlet pressure: 2.8 bar (280 kPa)
Outlet pressure: 176.4 bar (17,640 kPa)
Air-assist pressure: 3 bar (300 kPa)
Nozzle: No. 516 with 0.016 inch (0.41 mm) bore

### Test methods

### Wrap-around properties

Grounded steel pipes of 2 cm inner diameter were sprayed parallel to the pipe without and with electrostatic charge. The distance between gun and pipe was 10 cm. Wrap-around properties were checked by the amount of the formulation that covered the front and back of the pipe (wrap-around effect). A good wrap-around effect is an indication of the ease to charge the droplets. The pipes that were coated with the fouling control were inspected visually and the percentage of coverage on the back is indicated in Table 2 below.

### Transfer efficiency - parallel spraying

Grounded untreated tin plates (100 x 75 cm) were sprayed parallel to the plate without and with electrostatic charge. The distance between gun and plate was 10 cm. The amount of the paint pulled towards (attracted to) the grounded surface (plate) indicated the transfer efficiency. The plates that were coated with the fouling control compositions were inspected visually and the percentage of coverage is indicated in Table 2 below.

### Overspray - frontal spraying

Grounded untreated tin plates (100 x 75 cm) were sprayed directly (in front) with electrostatic charge. The distance between gun and pipe was 20 to 25 cm. The plates that were coated with the fouling control compositions were inspected visually. Overspray was rated visually. The results are shown in Table 2 below.

**Table 2:**

| | Wrap around effect (coverage) | | Transfer efficiency (coverage) | | Frontal spraying |
|---|---|---|---|---|---|
| | No electrostatic field | Electrostatic field | No electrostatic field | Electrostatic field | |
| Example 1 | 0% | 90% | 5-10 % | 80-90 % | No overspray |
| | | | | | No air entrapment |
| | | | | | Smooth surface |
| Comparative Example 2 | 0% | 5% | 5-10 % | 15 % | Overspray 20-30 % |

Example 1 showed good coverage along the front and back of the steel pipe. The paint pulled directly and efficiently all around the pipe (good wrap-around effect). Comparative Example 2 showed acceptable coverage on the front of the steel pipe but poor coverage on the back of the pipe (poor wrap-around effect). Example 1 showed high transfer efficiency; the formulation was attracted to the metal plate and minor overspray was observed. Comparative Example 2 showed very poor transfer efficiency; the formulation was not attracted to the metal plate and considerable overspray was observed.

Example 1 showed excellent electrostatic spraying properties, i.e., good atomization, good wrap-around effect, no overspray, no coating defects (no air entrapment), and high smoothness of the applied coat. Although Comparative Example 2 has a similar viscosity it showed unacceptable electrostatic spraying properties, i.e., only moderate wrap-around effect and considerable overspray.

### ASPECTS OF THE DISCLOSURE

1. A process for applying a high-solids epoxy coating composition onto a metal substrate by electrostatic spraying, wherein the coating composition is obtained by combining a first liquid and a second liquid, the first liquid comprising (A) an epoxy resin comprising (A1) a bisphenol A epoxy resin and (A2) a hydrogenated bisphenol A epoxy resin; (B) a reactive diluent; and (C) a silane compound; and the second liquid comprising (D) an amine-based curing agent; the coating composition has a solids content of 90 % by weight or more when determined according to ASTM D5201-05; has a viscosity of from 1,400 to 2,200 mPa·s when measured according to ASTM 2196-15 with a RVDV2T Brookfield Digital Viscometer, spindle 6, at 100 rpm at a temperature of 23°C; the ratio of the active hydrogen equivalent in the curing agent to the epoxy equivalent in the first liquid ranges from 50:100 to 100:100; and the weight ratio of bisphenol A epoxy resin (A1) to hydrogenated bisphenol A epoxy resin (A2) ranges from 60:40 to 25:75.
2. A process for applying a high-solids epoxy coating composition onto a metal substrate by electrostatic spraying, wherein the coating composition comprises (A) an epoxy resin comprising (A1) a bisphenol A epoxy resin and (A2) a hydrogenated bisphenol A epoxy resin; (B) a reactive diluent; (C) a silane compound; and (D) an amine-based curing agent; the coating composition has a solids content of 90 % by weight or more when determined according to ASTM D5201-05; has a viscosity of from 1,400 to 2,200 mPa·s when measured according to ASTM 2196-15 with a RVDV2T Brookfield Digital Viscometer, spindle 6, at 100 rpm at a temperature of 23°C; the ratios of active hydrogen equivalents in the curing agent to epoxy equivalents in the coating composition range from 50:100 to 100:100; and the weight ratio of the bisphenol A epoxy resin (A1) to the hydrogenated bisphenol A epoxy resin (A2) ranges from 60:40 to 25:75.
3. The process according to aspect 1 or 2, wherein the coating composition comprises from 5 to 35 % by weight, preferably from 6 to 30 % by weight, more preferably from 8 to 27 % by weight, and most preferably from 10 to 25 % by weight of a bisphenol A epoxy resin (A1), based on the total weight of the coating composition.
4. The process according to any one of the preceding aspects, wherein the coating composition comprises from 5 to 65 % by, preferably from 7 to 50 % by weight, more preferably from 8 to 30 % by weight, and most preferably 10 to 25 % by weight of a hydrogenated bisphenol A epoxy resin (A2), based on the total weight of the coating composition.
5. The process according to any one of the preceding aspects, wherein the coating composition comprises from 2.5 to 20 % by weight, preferably from 3 to 15 % by weight, more preferably 4 to 10 % by weight, and most preferably 5 to 8 % by weight, of a reactive diluent (B), based on the total weight of the coating composition.
6. The process according to any one of the preceding aspects, wherein the coating composition comprises from 2.5 to 30 % by weight, preferably from 3 to 27 % by weight, more preferably from 4 to 25 % by weight, and most preferably 5 to 20 % by weight, of a silane compound (C), based on the total weight of the coating composition.
7. The process according to any one of the preceding aspects, wherein the ratio of active hydrogen equivalents in the amine-based curing agent (D) to epoxy equivalents in epoxy resin (A) in the coating composition is in the range of from 55:100 to 100:100, preferably from 60:100 to 95:100, and more preferably from 70:100 to 90:100.
8. The process according to any one of the preceding aspects, wherein the weight ratio of the bisphenol A epoxy resin (A1) to the hydrogenated bisphenol A epoxy resin (A2) ranges from 60:40 to 30:70, and preferably from 55:45 to 40:60.
9. The process according to any one of the preceding aspects, wherein the coating composition further comprises (E) from 0.1 to 25 % by weight, preferably from 1 to 20 % by weight, and more preferably from 5 to 12 % by weight of a color pigment (E1) and from 25 to 60 % by weight, preferably from 30 to 55 % by weight, and more preferably 30 to 50 % by weight of an extender pigment (E2), based on the total weight of the coating composition.
10. The process according to any one of the preceding aspects, wherein the coating composition further (A) an epoxy resin comprising 5 to 35 % by weight of a bisphenol A epoxy resin (A1) and from 5 to 65 % by weight of a hydrogenated bisphenol A epoxy resin (A2); from 2.5 to 30 % by weight of a reactive diluent (B); from 2.5 to 20 % by weight of a silane compound (C); a pigment (E) comprising from 0.1 to 25 % by weight of a color pigment (E1) and 25 to 60 % by weight of an extender pigment (E2); and an amine-based curing agent (D), each based on the total weight of the coating composition.
11. The process according to any one of the preceding aspects, wherein the coating composition further comprises from 0.1 to 5 % by weight, preferably from 0.5 to 5 % by weight, more preferably 0.7 to 5 % by weight, of an anti-settling agent (F), based on the total weight of the coating composition.
12. The process according to any one of the preceding aspects, wherein the coating composition further comprises 4 % by weight or less, preferably 3 % by weight or less, and more preferably 2 % by weight or less of a solvent (G), based on the total weight of the composition, and most preferably the coating composition is free of volatile solvents.
13. The process according to any one of the preceding aspects, wherein the epoxy equivalent weight (EEW) of the bisphenol A epoxy resin (A1) ranges from 100 to 300 g/eq., preferably from 150 to 250 g/eq., and more preferably from 170 to 200 g/eq., as determined according to ASTM D1652-11.
14. The process according to any one of the preceding aspects, wherein, when measured according to according to ASTM D445-21 at a temperature of 25 °C, the viscosity of the bisphenol A epoxy resin (A1) is 7,000 to 30,000 mPa·s, preferably 8,000 to 20,000 mPa·s, and more preferably 11,000 to 15,000 mPa·s.
15. The process according to any one of the preceding aspects, wherein the bisphenol A epoxy resin (A1) comprises bisphenol A diglycidyl ether.
16. The process according to any one of the preceding aspects, wherein the epoxy equivalent of the hydrogenated bisphenol A epoxy resin (A2) ranges from 100 to 300 g/eq., preferably from 150 to 250 g/eq., and more preferably from 200 to 250 g/eq., as determined according to ASTM D1652-11.
17. The process according to any one of the preceding aspects, wherein, when measured according to according to ASTM D445-21 at a temperature of 25°C, the viscosity of the hydrogenated bisphenol A epoxy resin (A2) is 1,000 to 7,000 mPa·s, preferably 1,500 to 5,000 mPa·s, more preferably 1,800 to 4,000 mPa·s.
18. The process according to any one of the preceding aspects, wherein the hydrogenated bisphenol A epoxy resin (A2) comprises hydrogenated bisphenol A diglycidyl ether.
19. The process according to any one of the preceding aspects, wherein the reactive diluent (B) has a viscosity of from 10 to 50 mPa·s, when measured according to ASTM 2196-15 with a RVDV2T Brookfield Digital Viscometer, spindle 2 at 100 rpm at a temperature of 25°C, preferably from 10 to 40 mPa·s, and preferably from 10 to 35 mPa·s.
20. The process according to any one of the preceding aspects, wherein the reactive diluent (B) is a multifunctional epoxy compound.
21. The process according to aspect 20, wherein the reactive diluent (B) comprises 1,6-hexanediol diglycidyl ether and/or 1,4-butanediol diglycidyl ether.
22. The process according to any one of the preceding aspects, wherein the silane compound (C) comprises 3-glycidoxypropyltrimethoxysilane.
23. The process according to any one of the preceding aspects, wherein the amine-based curing agent (D) comprises a phenalkamine or a polyamine curing agent.
24. The process according to any one of the preceding aspects, wherein, when measured according to according to ASTM 2196-15 with a RVDV2T Brookfield Digital Viscometer, spindle 6, at 100 rpm at a temperature of 23°C, the viscosity of the amine-based curing agent (D) is 50 to 500 mPa·s, preferably 70 to 400 mPa·s, and more preferably 100 to 300 mPa·s.
25. The process according to any one of the preceding aspects, wherein the active hydrogen equivalent weight (AHEW) of the amine-based curing agent (D) is in the range of from 30 to 150 g/eq., preferably from 50 to 100 g/eq., and more preferably from 75 to 100 g/eq.
26. The process according to any one of aspects 9 to 25, wherein the color pigment (E1) comprises at least one of titanium oxide, carbon black, lead white, graphite, zinc sulfide, zinc oxide, chromium oxide, yellow nickel titanium, yellow chrome titanium, yellow iron oxide, red iron oxide, black iron oxide, phthalocyanine blue, phthalocyanine green, ultramarine blue, benzimidazolone yellow, and quinacridone red and azo red/yellow pigments.
27. The process according to any one of aspects 9 to 26, wherein the extender pigment (E2) comprises at least one of talc, clay, calcium carbonate, magnesium carbonate, barium sulfate, silicic acid, silicates, alumina, calcium sulfate, mica iron oxide (MIO), glass flakes and mica.
28. The process according to any one of aspects 11 to 27, wherein the anti-settling agent (F) comprises at least one of a polyamide wax, a polyethylene wax, and a bentonite-based thixotropic agent.
29. The process according to any one of aspects 12 to 28, wherein the solvent (G) comprises at least one of toluene, xylene, isobutanol, methyl ethyl ketone, methyl isobutyl ketone, and benzyl alcohol, preferably benzyl alcohol, and most preferably benzyl alcohol as the sole solvent.
30. The process according to any one of the preceding aspects, wherein, when measured as disclosed in the description, the coating composition has a pot life of at least 1 hour, preferably 1.2 to 2 hours, and more preferably 1.5 to 2 hours, defined as the time it takes for the viscosity of the coating composition to increase by 50 % after the first and second liquids have been combined.
31. The process according to any one of the preceding aspects, wherein, when measured according to ASTM D5895, the drying time (based on the thickness of the coating film of 300 µm) at 25° C is 8 to 12 hours.
32. The process according to any one of the preceding aspects, wherein, when determined according to ASTM D5201-05, the coating composition has a VOC content of 100 g/liter or less, preferably 80 g/liter or less, more preferably 70 g/liter or less, and most preferably 50 g/liter or less.
33. The process according to any one of the preceding aspects, wherein the solids content of the coating composition is at least 93 % by weight, preferably at least 95 % by weight, more preferably at least 97 % by weight, even more preferably at least 99 % by weight, and most preferably 100 % by weight.
34. The process according to any one of the preceding aspects, wherein the viscosity of the coating composition is 1,450 to 2,000 mPa·s, preferably 1,500 to 1,900 mPa·s when measured according to ASTM 2196-15 with a RVDV2T Brookfield Digital Viscometer, spindle 6, at 100 rpm at a temperature of 23°C.
35. The process according to any one of the preceding aspects, wherein the metallic substrate has an electric conductivity of at least 1 S/m, preferably at least 2 S/m, and most preferably at least 5 S/m.
36. The process according to any one of the preceding aspects, wherein the metallic substrate comprises at least one of steel, carbon steel, galvanized steel, shop primer steel, and aluminum.
37. The process according to any one of the preceding aspects, wherein the metal substrate is part of a ship such as an exposed deck, void space, cofferdam, engine room, cargo hold, cargo tank, or water ballast tank.
38. The process according to any one of the preceding aspects, comprising generating an electric field between the metallic substrate and a spraying device.
39. The process according to aspect 38, wherein the spraying device comprises a pump.
40. The process according to aspect 39 comprising electrostatic air-assisted airless atomization.
41. The process according to aspect 40, wherein the composition is applied using an air assist pressure of from 0.5 to 5 bar, preferably from 1.0 to 4.0 bar, and more preferably from 1.5 to 3.5 bar.
42. The process according to any one of aspects 38 to 41, wherein the spraying device comprises at least one nozzle which is preferably part of a spraying gun.
43. The process according to any one of aspects 38 to 42, wherein the inside diameter of the spray port at the tip of the nozzle is in the range of from 0.2 to 4 mm, preferably from 0.25 to 2 mm, and more preferably from 0.3 to 0.6 mm.
44. The process according to any one of aspects 40 to 43, wherein the static material pressure at the pump ranges from 50 to 200 bar, preferably from 70 to 150 bar, and most preferably from 80 to 100 bar.
45. The process according to any one of aspects 40 to 44, wherein the pump compression ratio is from 45:1 to 70:1, preferably from 50:1 to 67:1, preferably from 55:1 to 65:1, and most preferably 60:1.
46. The process according to any one of aspects 1 to 45, wherein the high-solids epoxy coating composition is a high-solids epoxy primer coating composition.
47. Use of a high-solids epoxy coating composition for application onto a metal substrate by electrostatic spraying, wherein the coating composition is obtained by combining a first liquid and a second liquid, the first liquid comprises (A) an epoxy resin comprising (A1) a bisphenol A epoxy resin and (A2) a hydrogenated bisphenol A epoxy resin; (B) a reactive diluent; and (C) a silane compound; and the second liquid comprises (D) an amine-based curing agent; the coating composition has a solids content of 90 % by weight or more when measured according to ASTM D5201-05; has a viscosity of from 1,400 to 2,200 mPa·s when measured according to ASTM 2196-15 with a RVDV2T Brookfield Digital Viscometer, spindle 6, at 100 rpm at a temperature of 23°C; the ratio of the active hydrogen equivalent in the curing agent to the epoxy equivalent in the first liquid ranges from 50:100 to 100:100; and the weight ratio of bisphenol A epoxy resin (A1) to hydrogenated bisphenol A epoxy resin (A2) ranges from 60:40 to 25:75, for application onto a metal substrate by electrostatic spraying.
48. The use according to aspect 47, wherein the electrostatic spraying is performed by the process according to any one of aspects 3 to 47.
49. A coated metal substrate obtainable by the process of any of aspects 1 to 46.

## Claims

1. A process for applying a high-solids epoxy coating composition onto a metal substrate by electrostatic spraying, wherein the coating composition is obtained by combining a first liquid and a second liquid, the first liquid comprising (A) an epoxy resin comprising (A1) a bisphenol A epoxy resin and (A2) a hydrogenated bisphenol A epoxy resin; (B) a reactive diluent; and (C) a silane compound; and the second liquid comprising (D) an amine-based curing agent; the coating composition has a solids content of 90 % by weight or more when determined according to ASTM D5201-05; has a viscosity of from 1,400 to 2,200 mPa·s when measured according to ASTM 2196-15 with a RVDV2T Brookfield Digital Viscometer, spindle 6, at 100 rpm at a temperature of 23°C; the ratio of the active hydrogen equivalent in the curing agent to the epoxy equivalent in the first liquid ranges from 50:100 to 100:100; and the weight ratio of bisphenol A epoxy resin (A1) to hydrogenated bisphenol A epoxy resin (A2) ranges from 60:40 to 25:75.

2. The process according to claim 1, wherein the coating composition comprises from 5 to 35 % by weight, preferably from 6 to 30 % by weight, more preferably from 8 to 27 % by weight, and most preferably from 10 to 25 % by weight of a bisphenol A epoxy resin (A1) and/or from 5 to 65 % by, preferably from 7 to 50 % by weight, more preferably from 8 to 30 % by weight, and most preferably 10 to 25 % by weight of a hydrogenated bisphenol A epoxy resin (A2) and/or from 2.5 to 20 % by weight, preferably from 3 to 15 % by weight, more preferably 4 to 10 % by weight, and most preferably 5 to 8 % by weight, of a reactive diluent (B) and /or from 2.5 to 30 % by weight, preferably from 3 to 27 % by weight, more preferably from 4 to 25 % by weight, and most preferably 5 to 20 % by weight, of a silane compound (C), each based on the total weight of the coating composition.

3. The process according to any one of the preceding claims, wherein the ratio of active hydrogen equivalents in the amine-based curing agent (D) to epoxy equivalents in epoxy resin (A) in the coating composition is in the range of from 55:100 to 100:100, preferably from 60:100 to 95:100, and more preferably from 70:100 to 90:100 and/or the weight ratio of the bisphenol A epoxy resin (A1) to the hydrogenated bisphenol A epoxy resin (A2) ranges from 60:40 to 30:70, and preferably from 55:45 to 40:60.

4. The process according to any one of the preceding claims, wherein the coating composition further comprises (E) from 0.1 to 25 % by weight, preferably from 1 to 20 % by weight, and more preferably from 5 to 12 % by weight of a color pigment (E1) and from 25 to 60 % by weight, preferably from 30 to 55 % by weight, and more preferably 30 to 50 % by weight of an extender pigment (E2) and/or from 0.1 to 5 % by weight, preferably from 0.5 to 5 % by weight, more preferably 0.7 to 5 % by weight, of an anti-settling agent (F), based on the total weight of the coating composition.

5. The process according to any one of the preceding claims, wherein the epoxy equivalent weight (EEW) of the bisphenol A epoxy resin (A1) ranges from 100 to 300 g/eq., preferably from 150 to 250 g/eq., and more preferably from 170 to 200 g/eq., and/or the epoxy equivalent of the hydrogenated bisphenol A epoxy resin (A2) ranges from 100 to 300 g/eq., preferably from 150 to 250 g/eq., and more preferably from 200 to 250 g/eq., as determined according to ASTM D1652-11.

6. The process according to any one of the preceding claims, wherein the bisphenol A epoxy resin (A1) comprises bisphenol A diglycidyl ether and/or the hydrogenated bisphenol A epoxy resin (A2) comprises hydrogenated bisphenol A diglycidyl ether.

7. The process according to any one of the preceding claims, wherein the reactive diluent (B) is a multifunctional epoxy compound, preferably comprising 1,6-hexanediol diglycidyl ether and/or 1,4-butanediol diglycidyl ether.

8. The process according to any one of the preceding claims, wherein the solids content of the coating composition is at least 93 % by weight, preferably at least 95 % by weight, more preferably at least 97 % by weight, even more preferably at least 99 % by weight, and most preferably 100 % by weight and/or the viscosity of the coating composition is 1,450 to 2,000 mPa·s, preferably 1,500 to 1,900 mPa·s.

9. The process according to any one of the preceding claims, wherein the metallic substrate has an electric conductivity of at least 1 S/m, preferably at least 2 S/m, and most preferably at least 5 S/m and/or the metallic substrate comprises at least one of steel, carbon steel, galvanized steel, shop primer steel, and aluminum.

10. The process according to any one of the preceding claims, wherein the metal substrate is part of a ship such as an exposed deck, void space, cofferdam, engine room, cargo hold, cargo tank, or water ballast tank.

11. The process according to any one of the preceding claims, comprising generating an electric field between the metallic substrate and a spraying device wherein the spraying device comprises a pump and at least one nozzle which is preferably part of a spraying gun.

12. The process according to claim 11 comprising electrostatic air-assisted airless atomization and wherein the composition is preferably applied using an air assist pressure of from 0.5 to 5 bar, more preferably from 1.0 to 4.0 bar, and most preferably from 1.5 to 3.5 bar.

13. The process according to any one of claims 11 or 12, wherein the static material pressure at the pump ranges from 50 to 200 bar, preferably from 70 to 150 bar, and most preferably from 80 to 100 bar and/or wherein the pump compression ratio is from 45:1 to 70:1, preferably from 50:1 to 67:1, preferably from 55:1 to 65:1, and most preferably 60:1.

14. Use of a high-solids epoxy coating composition for application onto a metal substrate by electrostatic spraying, wherein the coating composition is obtained by combining a first liquid and a second liquid, the first liquid comprises (A) an epoxy resin comprising (A1) a bisphenol A epoxy resin and (A2) a hydrogenated bisphenol A epoxy resin; (B) a reactive diluent; and (C) a silane compound; and the second liquid comprises (D) an amine-based curing agent; the coating composition has a solids content of 90 % by weight or more when measured according to ASTM D5201-05; has a viscosity of from 1,400 to 2,200 mPa·s when measured according to ASTM 2196-15 with a RVDV2T Brookfield Digital Viscometer, spindle 6, at 100 rpm at a temperature of 23°C; the ratio of the active hydrogen equivalent in the curing agent to the epoxy equivalent in the first liquid ranges from 50:100 to 100:100; and the weight ratio of bisphenol A epoxy resin (A1) to hydrogenated bisphenol A epoxy resin (A2) ranges from 60:40 to 25:75, for application onto a metal substrate by electrostatic spraying.

15. The use according to claim 14, wherein the electrostatic spraying is performed by the process according to any one of claims 2 to 13.

16. A coated metal substrate obtainable by the process of any of claims 1 to 13.
